(19) Europäisches Patentamt / European Patent Office / Office européen des brevets

(11) **EP 3 415 653 B1**

(12) **EUROPEAN PATENT SPECIFICATION**

(45) Date of publication and mention
of the grant of the patent:
**04.03.2020 Bulletin 2020/10**

(51) Int Cl.:
*C22C 38/00* (2006.01)        *C21D 9/46* (2006.01)
*C22C 38/38* (2006.01)        *C22C 38/60* (2006.01)
*C23C 2/02* (2006.01)         *C23C 2/06* (2006.01)
*C23C 2/28* (2006.01)         *C23C 2/40* (2006.01)

(21) Application number: **17750109.5**

(22) Date of filing: **30.01.2017**

(86) International application number:
**PCT/JP2017/003151**

(87) International publication number:
**WO 2017/138384 (17.08.2017 Gazette 2017/33)**

(54) **HIGH-STRENGTH GALVANIZED STEEL SHEET AND METHOD FOR PRODUCING SAME**

HOCHFESTES GALVANISIERTES STAHLBLECH UND VERFAHREN ZUR HERSTELLUNG DAVON

TÔLE EN ACIER GALVANISÉE HAUTEMENT RÉSISTANTE, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2016 JP 2016023403**

(43) Date of publication of application:
**19.12.2018 Bulletin 2018/51**

(73) Proprietor: **JFE Steel Corporation**
**Tokyo 100-0011 (JP)**

(72) Inventors:
• **HASEGAWA, Hiroshi**
  **Tokyo 100-0011 (JP)**
• **FUNAKAWA, Yoshimasa**
  **Tokyo 100-0011 (JP)**
• **YOSHITOMI, Hiromi**
  **Tokyo 100-0011 (JP)**
• **TAKASHIMA, Katsutoshi**
  **Tokyo 100-0011 (JP)**

(74) Representative: **Haseltine Lake Kempner LLP**
**Bürkleinstrasse 10**
**80538 München (DE)**

(56) References cited:
EP-A1- 2 559 782        EP-A1- 2 578 718
EP-A1- 2 881 481        WO-A1-2015/019558
WO-A1-2015/088523       WO-A1-2015/092982
WO-A1-2015/185975       JP-A- 2012 219 342
JP-A- 2014 051 683      JP-A- 2015 117 403
KR-A- 20090 003 700

**Description**

Technical Field

The present invention relates to a high-strength galvanized steel sheet that is suitable for automotive parts and has good bendability, spot weld crack resistance, stretch-flangeability, and axial compression stability (which means that a sheet can be stably pleated without cracks or fractures in axial compression) and to a method for producing the high-strength galvanized steel sheet.

Background Art

From the perspective of improved crash safety, fuel efficiency, and rust prevention of automobiles, there is a demand for anticorrosive high-strength steel sheets for use in automotive parts. However, higher-strength materials often have poorer workability. Thus, there is a demand for steel sheets with high workability as well as high strength and rust prevention. Furthermore, processed parts should have high performance. For example, parts, such as crash boxes, having a bent portion or a punched surface should have good bendability and stretch-flangeability from the perspective of workability. From the perspective of assembly and performance of parts, parts should have good spot welds and stable axial compression characteristics. These characteristics are desirably totally satisfied. Patent Literature 1 discloses a technique related to a galvannealed steel sheet with good bendability and stretch-flangeability. However, Patent Literature 1 does not describe spot weld cracking due to galvanizing or axial compression stability, and there is room for improvement in these characteristics.

Patent Literature 2 discloses a technique for decreasing the size of ferrite grains to improve axial compression stability. However, Patent Literature 2 does not consider stretch-flangeability, leaving room for improvement of stretch-flangeability. Furthermore, Patent Literature 2 has no findings in galvanized steel sheets and does not consider spot weld cracking due to galvanizing. Patent Literature 3 discloses a high-strength steel sheet which is suitable as a material for an automotive part, has yield strength (YS) of 780 MPa or more and tensile strength (TS) of 1180 MPa or more, and also has excellent spot weldability, ductility and bending workability; and a method for producing the high-strength steel sheet.

Thus, no steel sheets totally satisfy high strength, bendability, spot weld crack resistance, stretch-flangeability, and axial compression stability.

Citation List

Patent Literature

    PTL 1: Japanese Unexamined Patent Application Publication No. 2015-193907
    PTL 2: Japanese Unexamined Patent Application Publication No. 2009-138222
    PTL 3: WO 2015/092982 A1

Summary of Invention

Technical Problem

To solve these problems, the present invention aims to provide a high-strength galvanized steel sheet with good bendability, spot weld crack resistance, stretch-flangeability, and axial compression stability and a method for producing the high-strength galvanized steel sheet. Solution to Problem

The present inventors have made extensive studies to solve the problems. The present inventors have found that the problems can be solved by providing a high-strength hot-dip galvanized steel sheet that includes a steel sheet and a galvanized layer disposed on the steel sheet, wherein the steel sheet has a composition and a steel microstructure, the composition including, on a mass percent basis, C: 0.08% to 0.15%, Si: 0.1% to 1.0%, Mn: 2.0% to 3.0%, P: 0.100% or less (excluding 0%), S: 0.02% or less (excluding 0%), Al: 0.01% to 1.0%, and N: 0.010% or less, and one or more selected from Cr: 0.005% to 2.0%, Ti: 0.005% to 0.20%, Nb: 0.005% to 0.20%, Mo: 0.005% to 2.0%, and V: 0.005% to 2.0%, Cr + Ti + Nb + Mo + V being greater than or equal to Si, the remainder being Fe and incidental impurities, the steel microstructure containing ferrite and carbide-free bainite constituting 25% or less (including 0%) by area fraction in total, tempered martensite and carbide-containing bainite constituting 70% to 97% by area fraction in total, martensite and retained austenite constituting 3% to 20% by area fraction in total, and retained austenite constituting 1% to 5% by area fraction, the ferrite, the carbide-free bainite, the martensite, and the retained austenite constituting 3% to 30% by area fraction in total, the retained austenite having a C content in the range of 0.10% to 0.50%, the carbide-containing bainite and the tempered martensite having an average grain size in the range of 5 to 20 μm.

The present invention is based on such a finding and more specifically provides the following.

[1] A high-strength galvanized steel sheet including a steel sheet and a galvanized layer, wherein the steel sheet has a composition and a steel microstructure, the composition including, on a mass percent basis, C: 0.08% to 0.15%, Si: 0.1% to 1.0%, Mn: 2.0% to 3.0%, P: 0.100% or less (excluding 0%), S: 0.02% or less (excluding 0%), Al: 0.01% to 1.0%, and N: 0.010% or less, and one or more selected from Cr: 0.005% to 2.0%, Ti: 0.005% to 0.20%, Nb: 0.005% to 0.20%, Mo: 0.005% to 2.0%, and V: 0.005% to 2.0%, Cr + Ti + Nb + Mo + V being greater than or equal to Si, the remainder being Fe and incidental impurities, the steel microstructure containing ferrite and carbide-free bainite constituting 25% or less (including 0%) by area fraction in total, tempered martensite and carbide-containing bainite constituting 70% to 97% by area fraction in total, martensite and retained austenite constituting 3% to 20% by area fraction in total, and retained austenite constituting 1% to 5% by area fraction, the ferrite, the carbide-free bainite, the martensite, and the retained austenite constituting 3% to 30% by area fraction in total, the retained austenite having a C content in the range of 0.10% to 0.50%, the carbide-containing bainite and the tempered martensite having an average grain size in the range of 5 to 20 μm, and the galvanized layer is disposed on the steel sheet and has an Fe content of 6% or more by mass.

[2] The high-strength galvanized steel sheet according to [1], wherein the composition further includes, on a mass percent basis, one or more selected from Ni: 0.005% to 2.0%, Cu: 0.005% to 2.0%, B: 0.0001% to 0.0050%, Ca: 0.0001% to 0.0050%, REM: 0.0001% to 0.0050%, Sn: 0.01% to 0.50%, and Sb: 0.0010% to 0.10%.

[3] A method for producing a high-strength galvanized steel sheet, including: an annealing step of hot-rolling and pickling a steel having a composition according to [1] or [2] to form a hot-rolled sheet, optionally cold-rolling the hot-rolled sheet at a rolling reduction of 20% or more to form a cold-rolled sheet, heating the hot-rolled sheet or the cold-rolled sheet to a heating temperature in the range of 780°C to 950°C, a heating rate in a temperature range of 600°C to 720°C being 3.0°C/s or less, cooling the sheet to a temperature in the range of 150°C to 400°C, an average cooling rate in a temperature range of 450°C to 720°C being 10°C/s or more, a residence time in the temperature range of 780°C to 950°C in the heating and cooling being 30 seconds or more, and after the cooling, reheating the sheet at a heating temperature of more than 150°C and 600°C or less, a residence time at a temperature of more than 150°C and 600°C or less being 1000 seconds or less, or after the cooling, holding the sheet at a temperature of more than 150°C and 400°C or less for a residence time of 1000 seconds or less; and a galvanizing step of galvanizing the annealed sheet after the annealing step, then heating the sheet to a temperature in the range of 460°C to 600°C for plating and alloying treatment, and cooling the sheet to 50°C or less.

Advantageous Effects of Invention

The present invention can provide a high-strength galvanized steel sheet with good bendability, spot weld crack resistance, stretch-flangeability, and axial compression stability. A high-strength galvanized steel sheet according to the present invention is suitable as a material for automotive parts.

Brief Description of Drawings

[Fig. 1] Fig. 1 is an explanatory view of carbide-containing bainite (a) and carbide-free bainite (b).
[Fig. 2] Fig. 2 is a schematic view of an axial compression component used in the evaluation of axial compression stability.
[Fig. 3] Fig. 3 is a schematic view illustrating a method for forming a compression test specimen used in the evaluation of axial compression stability.
[Fig. 4] Fig. 4 is a schematic view illustrating a method for evaluating spot weld cracking.

Description of Embodiments

Embodiments of the present invention will be described below. The present invention is not limited to these embodiments.

A high-strength galvanized steel sheet according to the present invention includes a steel sheet and a galvanized layer. First, the steel sheet will be described below. The steel sheet has a particular composition and a particular steel microstructure. The composition and the steel microstructure are described below in this order.

The steel sheet has a composition including, on a mass percent basis, C: 0.08% to 0.15%, Si: 0.1% to 1.0%, Mn: 2.0% to 3.0%, P: 0.100% or less (excluding 0%), S: 0.02% or less (excluding 0%), Al: 0.01% to 1.0%, and N: 0.010% or less, and one or more selected from Cr: 0.005% to 2.0%, Ti: 0.005% to 0.20%, Nb: 0.005% to 0.20%, Mo: 0.005% to 2.0%, and V: 0.005% to 2.0%, Cr + Ti + Nb + Mo + V being greater than or equal to Si, the remainder being Fe and incidental impurities.

The composition may further include, on a mass percent basis, one or more selected from Ni: 0.005% to 2.0%, Cu: 0.005% to 2.0%, B: 0.0001% to 0.0050%, Ca: 0.0001% to 0.0050%, REM: 0.0001% to 0.0050%, Sn: 0.01% to 0.50%, and Sb: 0.0010% to 0.10%. Each of the components will be described below. The symbol "%" in the component content refers to "% by mass".

C: 0.08% to 0.15%

C is an effective element that contributes to an increased area fraction, strength, and axial compression stability of martensite or retained austenite. C content of less than 0.08% is insufficient for such effects. C content of more than 0.15% results in deteriorated bendability or spot weld cracking. Thus, C content ranges from 0.08% to 0.15%. The lower limit is preferably 0.09% or more. The upper limit is preferably 0.13% or less.

Si: 0.1% to 1.0%

Si reduces the formation of carbide and promotes concentration of C in austenite, thereby inducing the formation of retained austenite. Thus, Si is an effective element that contributes to improved axial compression stability. Such effects require a Si content of 0.1% or more. Si content of more than 1.0% results in excessive stabilization of retained austenite and low axial compression stability. Thus, Si content ranges from 0.1% to 1.0%. The lower limit is preferably 0.15% or more, more preferably more than 0.3%. The upper limit is preferably 0.7% or less.

Mn: 2.0% to 3.0%

Mn is an element that is effective in inhibiting the formation of ferrite or carbide-free bainite and forming tempered martensite or retained austenite. Mn content of 2.0% or less is insufficient for such effects. Mn content of more than 3.0% results in spot weld cracking. Thus, Mn content ranges from 2.0% to 3.0%. The lower limit is preferably 2.3% or more. The upper limit is preferably 2.8% or less.

P: 0.100% or less (excluding 0%)

P lowers hole expandability, and the P content is desirably minimized. In the present invention, the P content may be 0.100% or less. Although P content has no lower limit, P content of less than 0.001% results in low production efficiency. Thus, P content is preferably 0.001% or more.

S: 0.02% or less (excluding 0%)

S lowers hole expandability, and S content is preferably minimized. In the present invention, S content may be 0.02% or less. Although S content has no lower limit, S content of less than 0.0002% results in low production efficiency. Thus, S content is preferably 0.0002% or more.

Al: 0.01% to 1.0%

Al functions as a deoxidizer and is preferably added in a deoxidation step. Such an effect requires Al content of 0.01% or more. Al content of more than 1.0% results in a large amount of ferrite or carbide-free bainite, which is unfavorable for the present invention. Thus, Al content ranges from 0.01% to 1.0%. The lower limit is preferably 0.02% or more. The upper limit is preferably 0.50% or less.

N: 0.010% or less

An excessive amount of N results in spot weld cracking or deteriorated bendability. Thus, N content is 0.010% or less. The lower limit is preferably 0.0010% or more. The upper limit is preferably 0.0060% or less.

At least one selected from Cr: 0.005% to 2.0%, Ti: 0.005% to 0.20%, Nb: 0.005% to 0.20%, Mo: 0.005% to 2.0%, and V: 0.005% to 2.0%

Cr, Nb, Ti, Mo, and V form carbides and decrease the C content of retained austenite. Thus, these elements are important components that contribute to improved axial compression stability. Cr, Nb, Ti, Mo, or V content lower than the lower limit described above results in low axial compression stability. Cr, Nb, Ti, Mo, or V content higher than the upper limit results in an excessively low C content of retained austenite and a low hole expanding ratio. Thus, at least one selected from Cr, Nb, Ti, Mo, and V contents is Cr: 0.005% to 2.0%, Nb: 0.005% to 0.20%, Ti: 0.005% to 0.20%, Mo: 0.005% to 2.0%, or V: 0.005% to 2.0%. The preferred lowest contents are 0.10% or more for Cr, 0.01% or more for Nb, 0.01% or more for Ti, 0.05% or more for Mo, and 0.03% or more for V. The preferred highest contents are 0.80% or less for Cr, 0.05% or less for Nb, 0.05% or less for Ti, 0.50% or less for Mo, and 0.50% or less for V.

For two or more elements selected from Cr, Nb, Ti, Mo, and V, the amount of at least one of the elements is in the range described above. This is because the amounts of the other elements below the lower limits do not reduce the advantages of the present invention. Components in amounts below the lower limits are considered to be incidental impurities.

Cr + Ti + Nb + Mo + V ≥ Si

The amount of Cr, Ti, Nb, Mo, and V, which are carbide-forming elements, greater than or equal to the amount of Si, which is a carbide-inhibiting element, results in a low C content of retained austenite and desired axial compression stability. Thus, the sum of the Cr, Ti, Nb, Mo, and V contents is greater than or equal to the Si content.

The remainder includes Fe and incidental impurities. If necessary, the composition may include an appropriate amount of one or more of the following elements.

As described above, the composition may further include one or more selected from Ni: 0.005% to 2.0%, Cu: 0.005% to 2.0%, B: 0.0001% to 0.0050%, Ca: 0.0001% to 0.0050%, REM: 0.0001% to 0.0050%, Sn: 0.01% to 0.50%, and Sb: 0.0010% to 0.10%.

Ni, Cu, and B are effective elements that induce the formation of martensite and that contribute to high strength. Ni, Cu, and B contents are above the lower limits to effectively produce such effects. Ni, Cu, or B content above the upper limit results in spot weld cracking or deteriorated axial compression stability. The preferred lowest contents are 0.050% or more for Ni, 0.050% or more for Cu, and 0.0005% or more for B. The preferred highest contents are 0.5% or less for Ni, 0.5% or less for Cu, and 0.0040% or less for B.

Ca and REM are effective elements that contribute to improved hole expandability due to the morphology control of inclusions. The amounts of these elements are above the lower limits to effectively produce such an effect. Ca content or a REM content of more than 0.0050% may result in poor hole expandability due to an increased amount of inclusions. The preferred lowest contents are 0.0005% or more for Ca and 0.0005% or more for REM. The preferred highest contents are 0.0030% or less for Ca and 0.0030% or less for REM.

Sn and Sb are elements that inhibit, for example, decarbonization, denitrification, or deboronization and that are effective in inhibiting strength reduction of steel. Sn and Sb are also effective in inhibiting spot weld cracking. The amounts of these elements are above the lower limits to effectively produce such effects. Sn content or Sb content above the upper limit may result in poor hole expandability. The preferred lowest content is 0.0050% or more for each of Sn and Sb. The preferred highest contents are 0.10% or less for Sn and 0.05% or less for Sb.

Ni, Cu, B, Ca, REM, Sn, and Sb contents below their respective lower limits are permissible because these do not reduce the advantages of the present invention. Below the lower limits, these components are considered to be incidental impurities.

In the present invention, impurity elements such as Zr, Mg, La, and Ce may constitute up to 0.002% as incidental impurities.

The steel microstructure is described below. The steel microstructure contains ferrite and carbide-free bainite constituting 25% or less (including 0%) by area fraction in total, tempered martensite and carbide-containing bainite constituting 70% to 97% by area fraction in total, martensite and retained austenite constituting 3% to 20% by area fraction in total, and retained austenite constituting 1% to 5% by area fraction. The ferrite, the carbide-free bainite, the martensite, and the retained austenite constitute 3% to 30% by area fraction in total. The retained austenite has a C content in the range of 0.10% to 0.50%. The carbide-containing bainite and the tempered martensite have an average grain size in the range of 5 to 20 μm. Bainite includes tempered bainite.

Ferrite and carbide-free bainite: 25% or less (including 0%) in total

Ferrite and carbide-free bainite are unfavorable in terms of the balance between strength and stretch-flangeability and in terms of axial compression stability. In the present invention, ferrite and carbide-free bainite can constitute up to 25% by area fraction in total. Thus, the total area fraction of ferrite and carbide-free bainite is 25% or less, preferably 15% or less. The area fraction is determined by the measurement method described in the examples.

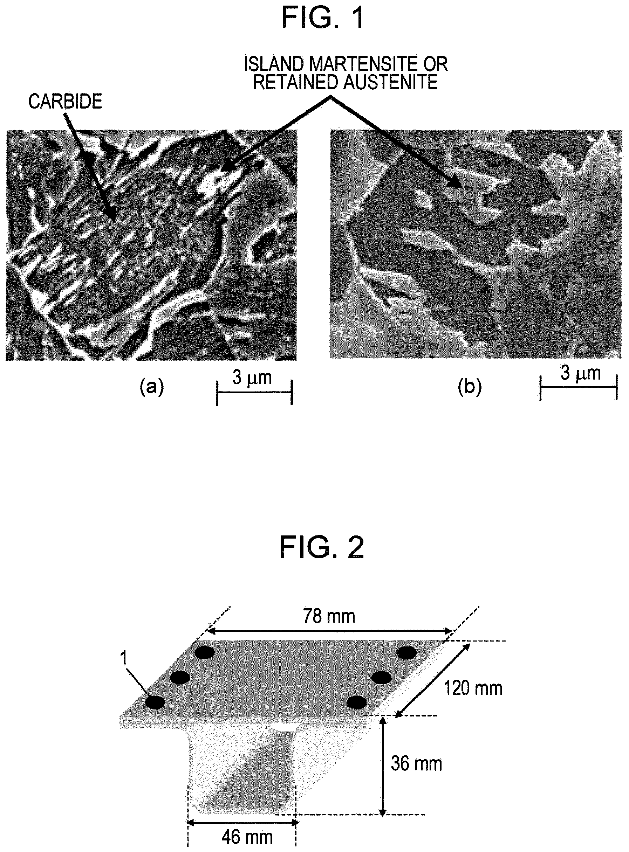

Carbide-free bainite contains no carbide in an image data, which is taken with a scanning electron microscope (SEM) at a magnification of 1500 at one fourth the thickness of a sheet from a surface of the sheet in a cross section of the sheet parallel to the rolling direction and parallel to the thickness direction polished and then subjected to corrosion with 3% nital. In image data shown in Fig. 1, carbide, which appears as white dots or lines, can be distinguished from island martensite or retained austenite, which does not appear as dots or lines. In the present invention, dots or lines have a minor axis length of 100 nm or less. Carbide-free bainite may include island martensite, which appears as white or light gray portions in image data. Carbide may be an iron carbide, such as cementite, Ti carbide, or Nb carbide.

Tempered martensite and carbide-containing bainite: 70% to 97% in total

Tempered martensite and carbide-containing bainite are important for the balance between strength and stretch-flangeability. A total area fraction of these components below 70% results in an undesired tensile strength (TS) or hole expanding ratio. A total area fraction of more than 97% results in low axial compression stability due to a decreased amount of retained austenite or martensite. Thus, the total area fraction of tempered martensite and carbide-containing bainite ranges from 70% to 97%. The lower limit is preferably 75% or more, more preferably 80% or more. The upper limit is preferably 95% or less, more preferably 93% or less. The area fraction is determined by the measurement method described in the examples.

Carbide-containing bainite contains carbide in an image data, which is taken with a scanning electron microscope (SEM) at a magnification of 1500 at one fourth the thickness of a sheet from a surface of the sheet in a cross section of the sheet parallel to the rolling direction and parallel to the thickness direction polished and then subjected to corrosion with 3% nital. The area fraction is determined by the method described in the examples.

Martensite and retained austenite: 3% to 20% in total

A total area fraction of martensite (which means asquenched martensite and also includes autotempered martensite) and retained austenite below 3% results in low axial compression stability. A total area fraction of more than 20% results in a low hole expanding ratio. Thus, the total area fraction of martensite and retained austenite ranges from 3% to 20%. The lower limit is preferably 5% or more. The upper limit is preferably 15% or less. The area fraction is determined by the measurement method described in the examples. Retained austenite has a C content in the range of 0.10% to 0.50%, as described below.

Retained austenite: 1% to 5%

In the present invention, a minute amount of retained austenite is important for axial compression stability. Although the mechanism of that is not entirely clear, it is surmised that unstable retained austenite in a deformation stress concentrated portion changes immediately into martensite in axial compression and promotes strain propagation. Less than 1% of unstable retained austenite is insufficient for such an effect. More than 5% of unstable retained austenite lowers bendability or stretch-flangeability. Thus, the area fraction of retained austenite ranges from 1% to 5%. The area fraction is determined by the measurement method described in the examples.

C content of retained austenite: 0.10% to 0.50%

C content of retained austenite above 0.50% results in excessively stable retained austenite and low axial compression stability. C content of less than 0.10% results in a low hole expanding ratio. Thus, C content of retained austenite ranges from 0.10% to 0.50%. The lower limit is preferably 0.2% or more. The upper limit is preferably 0.45% or less. The C content is determined by the measurement method described in the examples.

Ferrite, carbide-free bainite, martensite, and retained austenite: 3% to 30% in total

The total area fraction of ferrite, carbide-free bainite, martensite, and retained austenite, if present at all, ranges from 3% to 30% in terms of the balance between bendability, axial compression stability, and stretch-flangeability. A total area fraction of less than 3% results in undesired amounts of martensite and retained austenite and low axial compression stability. A total area fraction of more than 30% results in low bendability and a low hole expanding ratio. Thus, the total area fraction of ferrite, carbide-free bainite, martensite, and retained austenite ranges from 3% to 30%. The lower limit is preferably 4% or more, more preferably 5% or more. The upper limit is preferably 15% or less, more preferably 12% or less.

Average grain sizes of tempered martensite and carbide-containing bainite: 5 to 20 $\mu$m

An average grain size of tempered martensite or carbide-containing bainite below 5 $\mu$m results in an increased amount of retained austenite at grain boundaries and results in low bendability or a low hole expanding ratio. An average grain size of tempered martensite or carbide-containing bainite above 20 $\mu$m results in low bendability or axial compression stability. Thus, each of tempered martensite and carbide-containing bainite has an average grain size in the range of 5 to 20 $\mu$m. The lower limit is preferably 6 $\mu$m or more. The upper limit is preferably 16 $\mu$m or less. The average grain size is determined by the method described in the examples.

The steel microstructure may include other microstructures, such as pearlite. In the present invention, other microstructures may constitute up to 10% by area fraction without reducing the advantages of the present invention. In other words, the phases described above preferably constitute 90% or more.

Next, the galvanized layer is described below. The galvanized layer has an Fe content of 6% or more by mass. Fe content of 6% or more by mass can result in improved spot weld crack resistance. The Fe content has no upper limit but is preferably 15% or less by mass in consideration of powdering.

<Method for Producing High-Strength Galvanized Steel Sheet>

A method for producing a high-strength galvanized steel sheet according to the present invention includes an annealing step and a galvanizing step.

The annealing step includes hot-rolling and pickling a steel having the composition described above to form a hot-rolled sheet, optionally cold-rolling the hot-rolled sheet at a rolling reduction of 20% or more to form a cold-rolled sheet, heating the hot-rolled sheet or the cold-rolled sheet to a heating temperature in the range of 780°C to 950°C, the heating rate in the temperature range of 600°C to 720°C being 3.0°C/s or less, cooling the sheet to a temperature in the range of 150°C to 400°C, the average cooling rate in the temperature range of 450°C to 720°C being 10°C/s or more, the residence time in the temperature range of 780°C to 950°C in the heating and cooling being 30 seconds or more, and after the cooling, reheating the sheet at a heating temperature of more than 150°C and 600°C or less, the residence time at a temperature of more than 150°C and 600°C or less being 1000 seconds or less, or after the cooling, holding the sheet at a temperature of more than 150°C and 400°C or less for a residence time of 1000 seconds or less.

First, a hot-rolled sheet for use in a production method according to the present invention will be described below. The hot-rolled sheet may be produced by any method. A slab for use in the production of the hot-rolled sheet is preferably formed by a continuous casting process to prevent macrosegregation or may be formed by an ingot casting process or a thin slab casting process. To hot-rolling the slab, the slab may be cooled to room temperature and subsequently reheated for hot rolling or may be placed in a furnace for hot rolling without being cooled to room temperature. Alternatively, an energy-saving process may also be performed in which the slab is immediately hot-rolled after lightly conserving heat. The slab is preferably heated to 1100°C or more to melt carbide or prevent the increase in rolling force. The slab is preferably heated to 1300°C or less to prevent the increase in scale loss. The slab heating temperature is the surface temperature of the slab. To hot-rolling the slab, a rough bar after rough rolling may be heated. A continuous rolling process may also be performed in which rough bars are joined together and are continuously subjected to finish rolling. Finish rolling may increase anisotropy and reduce workability after cold rolling and annealing. Thus, the finishing temperature is preferably higher than the $Ar_3$ transformation temperature. To reduce rolling force or make the shape and material quality uniform, lubrication rolling to achieve a friction coefficient in the range of 0.10 to 0.25 is preferably performed in all or part of the finish rolling passes.

A steel sheet after coiling is pickled to remove scales and, if necessary, is subjected to heat treatment and/or cold rolling at a rolling reduction of 20% or more.

Rolling reduction in cold rolling: 20% or more

A rolling reduction in cold rolling below 20% results in the absence of the steel microstructure due to coarse grains formed by annealing. Thus, the rolling reduction in cold rolling is 20% or more, preferably 30% or more. Although the rolling reduction has no upper limit, a rolling reduction of more than 90% results in an undesired shape of the rolled sheet. Thus, a rolling reduction of 90% or less is preferred.

Heating rate in the temperature range of 600°C to 720°C: 3.0°C/s or less

A heating rate of more than 3.0°C/s in the temperature range of 600°C to 720°C results in the absence of a steel microstructure according to the present invention due to a decrease in grain size. Thus, the heating rate in the temperature range of 600°C to 720°C is 3.0°C/s or less. The heating rate has no lower limit but is preferably 0.1°C/s or more in terms of, for example, production efficiency. Outside this temperature range, any heating rate is permissible.

The heating rate ranges typically from 0.5°C/s to 3.0°C/s. The heating rate refers to the average heating rate.

Heating temperature: 780°C to 950°C

A heating temperature (annealing temperature) of less than 780°C results in an undesired steel microstructure due to excessive formation of ferrite. A heating temperature of more than 950°C results in an undesired steel microstructure due to coarse austenite. Thus, the heating temperature ranges from 780°C to 950°C, preferably 780°C to 900°C.

Average cooling rate in the temperature range of 450°C to 720°C: 10°C/s or more

An average cooling rate of less than 10°C/s in the temperature range of 450°C to 720°C results in an undesired steel microstructure due to the formation of a large amount of ferrite or carbide-free bainite. Thus, the average cooling rate in the temperature range of 450°C to 720°C is 10°C/s or more, preferably 15°C/s or more. Although the average cooling rate has no upper limit, an average cooling rate of more than 100°C/s tends to result in considerable temperature variations. Thus, the average cooling rate is preferably 100°C/s or less from the viewpoint of operation. Outside this temperature range, any average cooling rate is permissible. The average cooling rate ranges typically from 15°C/s to 40°C/s.

Cooling stop temperature: 150°C to 400°C

A cooling stop temperature of less than 150°C results in an undesired steel microstructure due to the formation of a decreased amount of retained austenite. A cooling stop temperature of more than 400°C results in an undesired steel microstructure due to the formation of an increased amount of martensite or retained austenite. Thus, the cooling stop temperature ranges from 150°C to 400°C, preferably 150°C to 350°C. In the present invention, cooling stop and retention affects little to the final characteristics and may be performed as required.

Residence time in the temperature range of 780°C to 950°C: 30 seconds or more

A residence time of less than 30 seconds in the temperature range of 780°C to 950°C in the heating and cooling results in an undesired steel microstructure due to insufficient formation of austenite and due to the formation of an increased amount of ferrite. Thus, the residence time in the temperature range of 780°C to 950°C is 30 seconds or more. The residence time has no upper limit but is preferably 1000 seconds or less in terms of, for example, production efficiency.

Reheating temperature: more than 150°C and 600°C or less

A reheating temperature of more than 600°C results in an undesired amount of retained austenite due to the decomposition of austenite into pearlite or the like. This also results in softening of tempered martensite or carbide-containing bainite, thus resulting in low strength. Because heating to a temperature lower than the cooling stop temperature is impossible, the lower limit is more than 150°C. Thus, the reheating temperature is more than 150°C and 600°C or less, preferably more than 150°C and 500°C or less.

Residence time at a temperature of more than 150°C and 600°C or less: 1000 seconds or less

A residence time of more than 1000 seconds results in an undesired amount of retained austenite due to the decomposition of austenite into pearlite or the like. Thus, the residence time is 1000 seconds or less, preferably 500 seconds or less. The residence time is preferably 5 seconds or more in terms of operational stability.
Instead of the reheating, after the cooling, the sheet may be held at a temperature of more than 150°C and 400°C or less for a residence time of 1000 seconds or less.
The galvanizing step after the annealing step includes galvanizing an annealed sheet, then heating the sheet to a temperature in the range of 460°C to 600°C for plating and alloying treatment, and cooling the sheet to 50°C or less. For example, a coated layer formed on the annealed sheet contains, on a mass percent basis, Fe: 5.0% to 20.0%, Al: 0.001% to 1.0%, and one or two or more selected from Pb, Sb, Si, Sn, Mg, Mn, Ni, Cr, Co, Ca, Cu, Li, Ti, Be, Bi, and REM: 0% to 30% in total, the remainder being Zn and incidental impurities. The plating treatment method can be hot-dip galvanizing under appropriate conditions.

Plating and alloying treatment temperature: 460°C to 600°C

In the alloying treatment after the galvanizing treatment, an alloying treatment temperature of less than 460°C results in spot weld cracking due to insufficient alloying. An alloying temperature of more than 600°C results in an undesired amount of retained austenite due to the decomposition of austenite into pearlite or the like. Thus, the alloying treatment temperature ranges from 460°C to 600°C, preferably 470°C to 580°C. The alloying time is typically, but is not limited to, in the range of 1 to 120 seconds.

Cooling stop temperature: 50°C or less

After the alloying treatment, the sheet is cooled to 50°C or less. Cooling to 50°C or less changes austenite partly into retained austenite and partly into martensite, thus forming a microstructure according to the present invention.

EXAMPLES

A steel with a composition listed in Table 1 was melted in a vacuum melting furnace in a laboratory and was rolled to form a steel slab (in Table 1, N is an incidental impurity). The steel slab was heated to 1200°C, was rough-rolled, and finish-rolled to form a hot-rolled sheet 3.0 mm in thickness. The finish-rolling temperature in the hot rolling was 900°C, and the coiling temperature was 500°C. The hot-rolled sheet was then pickled and was optionally cold-rolled to form a cold-rolled sheet 1.4 mm in thickness (the rolling reduction is listed in Table 2). The hot-rolled sheet or cold-rolled sheet was annealed. The annealing was performed in a heat treatment and plating treatment apparatus in a laboratory under the conditions shown in Table 2. Thus, galvannealed steel sheets 1 to 31 were formed. In galvanizing treatment, the sheet was immersed in a plating bath at 460°C and was plated at 35 to 45 $g/m^2$. In alloying treatment, the plated sheet was held at a temperature in the range of 450°C to 650°C for 30 seconds and was cooled to 50°C or less. The galvannealed steel sheet was subjected to temper rolling at an elongation percentage of 0.3% and was subjected to microstructure observation by the following test method. The galvannealed steel sheet was examined for tensile properties, bendability, hole expandability, spot weld crack resistance, and axial compression stability.

Microstructure Observation

The area fractions of ferrite, carbide-free bainite, martensite, tempered martensite, and carbide-containing bainite refer to the area percentages of respective microstructures based on the observed area. These area fractions were determined by cutting a sample from the annealed steel sheet, taking image data in three visual fields with a scanning electron microscope (SEM) at a magnification of 1500 at one fourth the thickness of the sample in a cross section of the sample parallel to the rolling direction and parallel to the thickness direction polished and then subjected to corrosion with 3% nital, determining the area fraction of each microstructure using Image-Pro available from Media Cybernetics, and taking the average area fraction of the visual fields as the area fraction of each microstructure. In image data, ferrite is black, martensite and retained austenite are white or light gray, and bainite, including aligned carbide and/or island martensite, is black or dark gray (Observation of grain boundaries between bainite grains can differentiate between carbide-free bainite and carbide-free bainite. Island martensite is white or light gray in image data, as shown in Fig. 1.). In the present invention, the area fraction of bainite refers to the area fraction of black or dark gray portions in the bainite except white or light gray portions. The area fraction of martensite was determined by subtracting the area fraction (the volume fraction was considered to be the area fraction) of retained austenite described later from the area fraction of the white or light gray microstructures. In the present invention, martensite may be autotempered martensite containing carbide or tempered martensite. Carbide-containing martensite has different carbide orientations and is different from bainite. Island martensite is also martensite having any of the characteristics described above. In the present invention, a white portion that does not appear as a dot or line was considered to be the martensite or retained austenite. Pearlite can be seen as a black and white layered microstructure. The grain sizes of tempered martensite and carbide-containing bainite were measured by the intercept method in an image in which the area fraction was determined. The grain sizes were averaged to determine the average grain size of the microstructure. The number of lines used in the intercept method were 10 in the longitudinal direction and 10 in the transverse direction. Thus, an image was divided into 11 equal parts in each direction. In the present invention, grain boundaries include no packet boundaries or no block boundaries.

The volume fraction of retained austenite was determined by grinding an annealed steel sheet by one fourth the thickness of the sheet, chemically polishing the surface by 0.1 mm, measuring the integrated reflection intensities of the (200), (220), and (311) planes of fcc iron (austenite) and the (200), (211), and (220) planes of bcc iron (ferrite) with an X-ray diffractometer using Mo K$\alpha$ radiation, and calculating the volume fraction from the intensity ratio of the integrated reflection intensities of the planes of the fcc iron to the integrated reflection intensities of the planes of the bcc iron. The volume fraction was considered to be the area fraction of retained austenite.

The lattice constant of retained austenite is calculated using the formula (1) from the diffraction peak shift of the (220) plane with an X-ray diffractometer using Co K$\alpha$ radiation. The C content of retained austenite is calculated using the formula (2).
[Math. 1]

$$a = 0.17889\sqrt{2} / \sin\theta \qquad (1)$$

$$a = 0.3578 + 0.0033[C] + 0.000095[Mn] + 0.00006[Cr] +$$

$$0.0022[N] + 0.00056[Al] + 0.00015[Cu] + 0.00031[Mo] \qquad (2)$$

In the formulae, a denotes the lattice constant (nm) of retained austenite phase, $\theta$ denotes the diffraction peak angle of the (220) plane divided by 2 (rad), and [M] denotes the mass percent of the element M in the retained austenite phase. In the present invention, the mass percent of the element M other than C in the retained austenite phase is based on the total mass of steel.

Fe Content

The Fe content of the galvanized layer was determined by dissolving the galvanized layer in hydrochloric acid containing an inhibitor and measuring the Fe content of the hydrochloric acid by ICP analysis.

Tensile Test

A JIS 5 tensile test piece (JIS Z 2201) was taken from an annealed sheet in a direction perpendicular to the rolling direction. TS was measured at a strain rate of $10^{-3}$ /s in a tensile test according to JIS Z 2241. In the present invention, 980 MPa or more is acceptable.

Bending Test

A strip of test specimen 30 mm in width and 100 mm in length was taken from an annealed sheet. A bending test was performed in the direction parallel to the rolling direction. A 90-degree V bending test was performed at a stroke rate of 10 mm/s, an indentation load of 10 tons, a press holding time of 5 seconds, and a bend radius of 3.5 mm for a test specimen 1.4 mm in thickness or 7.5 mm for a test specimen 3.0 mm in thickness. A bend line was observed with a 10x magnifying lens. A test specimen without 0.5-mm or larger cracks was rated "good".

Axial Compression Stability

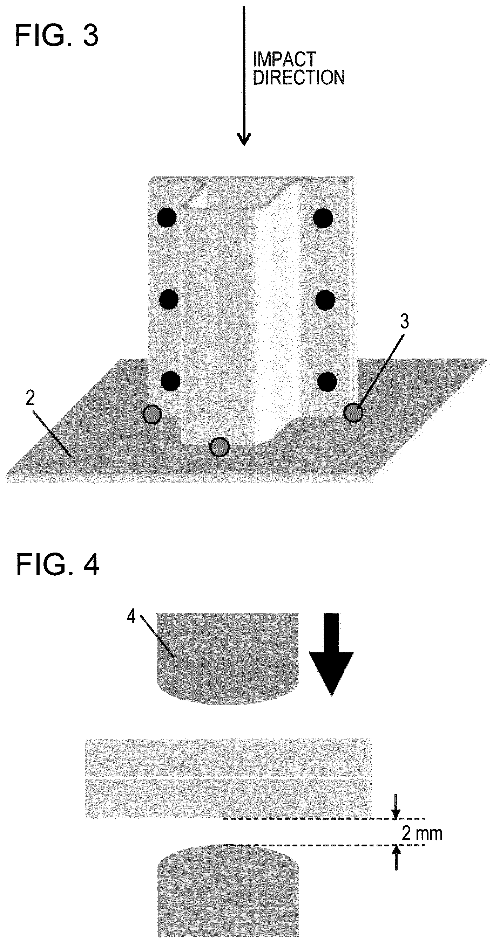

A test specimen 120 mm in width and 78 mm in length and a test specimen 120 mm in width and 150 mm in length were taken from an annealed sheet. The width direction is perpendicular to the rolling direction. The bend radius was 4 mm for a test specimen 1.4 mm in thickness or 8 mm for a test specimen 3.0 mm in thickness. An axial compression component illustrated in Fig. 2 was formed by bending and spot welding.
Subsequently, as illustrated in Fig. 3, the axial compression component was joined to a base plate by TIG welding, thus forming a compression test specimen. In a compression test, the compression test specimen was compressed by 80 mm with an impactor at a uniform impact speed of 10 m/s from above in Fig. 3. A compressed specimen pleated without cracks or fractures was rated "good".

Spot Weld Cracking

Two test specimens 50 mm in width and 150 mm in length were taken from an annealed sheet in the direction parallel to the rolling direction. As illustrated in Fig. 4, two test specimens were clamped together. The clearance between a lower electrode (fixed) and a steel sheet was 2 mm. The welding pressure was 3.5 kN. The welding nugget diameter was 5.9 mm for test specimens 1.4 mm in thickness or 8.7 mm for test specimens 3.0 mm in thickness. An upper electrode was pushed against the test specimens under one-step constant current conditions to perform spot welding. After welding, the test specimens were cut in half. A cross section parallel to the thickness direction was observed with an optical microscope. Test specimens without 0.2-mm or larger cracks were considered to have good spot weld crack resistance.

Hole-Expanding Test

Stretch-flangeability was evaluated by subjecting a 150 mm x 150 mm test specimen three times to a hole-expanding test according to JFS T 1001 (the Japan Iron and Steel Federation standard, 2008) with a 60-degree conical punch to determine the average hole expanding ratio (%). A hole expanding ratio of 40% or more was good.
Table 3 shows the results.

[Table 1]

| Steel | Composition (mass%) | | | | | | | | | | | | | | Notes |
|---|---|---|---|---|---|---|---|---|---|---|---|---|---|---|---|
| | C | Si | Mn | P | S | Al | N | Cr | Nb | Ti | Mo | V | Others | Cr+Nb+Ti+Mo+V-Si | |
| A | 0.10 | 0.20 | 2.7 | 0.015 | 0.001 | 0.030 | 0.003 | 0.80 | 0.000 | 0.000 | 0.00 | 0.00 | - | 0.600 | Within the scope of invention |
| B | 0.11 | 0.50 | 2.6 | 0.015 | 0.001 | 0.030 | 0.003 | 0.60 | 0.015 | 0.035 | 0.00 | 0.00 | - | 0.150 | Within the scope of invention |
| C | 0.12 | 0.60 | 2.3 | 0.015 | 0.001 | 0.030 | 0.003 | 0.40 | 0.025 | 0.025 | 0.15 | 0.03 | - | 0.030 | Within the scope of invention |
| D | 0.09 | 0.70 | 2.9 | 0.015 | 0.001 | 0.030 | 0.003 | 0.60 | 0.035 | 0.015 | 0.30 | 0.10 | Ni:0.1 | 0.350 | Within the scope of invention |
| E | 0.13 | 0.15 | 2.3 | 0.015 | 0.001 | 0.030 | 0.003 | 0.00 | 0.045 | 0.000 | 0.30 | 0.00 | Cu:0.1 | 0.195 | Within the scope of invention |
| F | 0.11 | 0.45 | 2.5 | 0.015 | 0.001 | 0.030 | 0.003 | 0.60 | 0.035 | 0.015 | 0.00 | 0.00 | B:0.0011 | 0.200 | Within the scope of invention |
| G | 0.14 | 0.20 | 2.8 | 0.015 | 0.001 | 0.030 | 0.003 | 0.10 | 0.025 | 0.025 | 0.20 | 0.00 | Ca:0.0010 | 0.150 | Within the scope of invention |
| H | 0.10 | 0.20 | 2.8 | 0.015 | 0.001 | 0.030 | 0.003 | 0.20 | 0.015 | 0.015 | 0.20 | 0.00 | REM:0.0020 | 0.230 | Within the scope of invention |
| I | 0.10 | 0.20 | 2.8 | 0.015 | 0.001 | 0.030 | 0.003 | 0.00 | 0.000 | 0.015 | 0.20 | 0.00 | Sn:0.01 | 0.015 | Within the scope of invention |
| J | 0.10 | 0.20 | 2.8 | 0.015 | 0.001 | 0.030 | 0.003 | 0.20 | 0.025 | 0.015 | 0.00 | 0.00 | Sb:0.01 | 0.040 | Within the scope of invention |
| K | 0.10 | 0.60 | 2.8 | 0.015 | 0.001 | 0.030 | 0.003 | 0.30 | 0.000 | 0.015 | 0.10 | 0.00 | - | -0.185 | Outside the scope of invention |
| L | 0.05 | 0.20 | 2.8 | 0.015 | 0.001 | 0.030 | 0.003 | 0.20 | 0.015 | 0.015 | 0.20 | 0.00 | - | 0.230 | Outside the scope of invention |
| M | 0.16 | 0.20 | 2.8 | 0.015 | 0.001 | 0.030 | 0.003 | 0.20 | 0.015 | 0.015 | 0.20 | 0.00 | - | 0.230 | Outside the scope of invention |
| N | 0.10 | 1.10 | 2.8 | 0.015 | 0.001 | 0.030 | 0.003 | 1.00 | 0.000 | 0.015 | 0.20 | 0.00 | - | 0.115 | Outside the scope of invention |
| O | 0.10 | 0.00 | 2.8 | 0.015 | 0.001 | 0.030 | 0.003 | 0.20 | 0.015 | 0.015 | 0.20 | 0.00 | - | 0.430 | Outside the scope of invention |
| P | 0.10 | 0.20 | 1.5 | 0.015 | 0.001 | 0.030 | 0.003 | 0.20 | 0.015 | 0.015 | 0.20 | 0.00 | - | 0.230 | Outside the scope of invention |
| Q | 0.10 | 0.20 | 3.2 | 0.015 | 0.001 | 0.030 | 0.003 | 0.20 | 0.015 | 0.015 | 0.20 | 0.00 | - | 0.230 | Outside the scope of invention |
| R | 0.12 | 0.20 | 2.7 | 0.015 | 0.001 | 0.030 | 0.003 | 0.00 | 0.000 | 0.000 | 0.30 | 0.00 | - | 0.100 | Within the scope of invention |

* The underline indicates the outside of the scope of the present invention.

[Table 2]

| Steel sheet No. | Steel | Cold-rolling reduction (%) | Conditions | | | | | | | | | Notes |
|---|---|---|---|---|---|---|---|---|---|---|---|---|
| | | | Average heating rate at 600°C-720°C (°C/s) | Heating temperature (°C) | Residence time at 780°C-950°C (S) | Average cooling rate at 450°C-720°C (°C/s) | Cooling stop temperature (°C) | Reheating temperature or holding temperature after cooling (°C) | Residence time in reheating or holding (s) | Plating and alloying temperature (°C) | | |
| 1 | A | 50 | 1 | 830 | 120 | 20 | 250 | 450 | 100 | 530 | | Example |
| 2 | | 10 | 1 | 830 | 120 | 20 | 250 | 450 | 100 | 530 | | Comparative example |
| 3 | | 50 | 1 | 770 | 120 | 20 | 250 | 450 | 100 | 530 | | Comparative example |
| 4 | B | 50 | 1 | 830 | 120 | 20 | 250 | 450 | 100 | 530 | | Example |
| 5 | | 50 | 1 | 980 | 120 | 20 | 250 | 450 | 100 | 530 | | Comparative example |
| 6 | | 50 | 1 | 830 | 10 | 20 | 250 | 450 | 100 | 530 | | Comparative example |
| 7 | C | - | 1 | 830 | 120 | 50 | 250 | 450 | 100 | 530 | | Example |
| 8 | | - | 1 | 830 | 120 | 50 | 250 | 550 | 100 | 530 | | Example |
| 9 | | - | 1 | 830 | 120 | 3 | 250 | 450 | 100 | 530 | | Comparative example |
| 10 | D | 50 | 1 | 930 | 120 | 20 | 250 | 450 | 100 | 530 | | Example |
| 11 | | 50 | 1 | 930 | 120 | 20 | 500 | 500 | 100 | 530 | | Comparative example |
| 12 | | 50 | 1 | 930 | 120 | 20 | 25 | 450 | 100 | 530 | | Comparative example |

13

| Steel sheet No. | Steel | Cold-rolling reduction (%) | Conditions | | | | | | | | | Notes |
|---|---|---|---|---|---|---|---|---|---|---|---|---|
| | | | Average heating rate at 600°C-720°C (°C/s) | Heating temperature (°C) | Residence time at 780°C-950°C (S) | Average cooling rate at 450°C-720°C (°C/s) | Cooling stop temperature (°C) | Reheating temperature or holding temperature after cooling (°C) | Residence time in reheating or holding (s) | Plating and alloying temperature (°C) | | |
| 13 | | 50 | 1 | 830 | 120 | 20 | 250 | 450 | 100 | 530 | | Example |
| 14 | | 50 | 1 | 830 | 120 | 20 | 250 | 650 | 100 | 530 | | Comparative example |
| 15 | E | 50 | 1 | 830 | 120 | 20 | 250 | 450 | 1200 | 530 | | Comparative example |
| 16 | | 50 | 7 | 830 | 120 | 20 | 250 | 450 | 100 | 530 | | Comparative example |
| 17 | | 50 | 1 | 830 | 120 | 20 | 250 | 450 | 100 | 530 | | Example |
| 18 | F | 50 | 1 | 830 | 120 | 20 | 250 | 450 | 100 | 450 | | Comparative example |
| 19 | | 50 | 1 | 830 | 120 | 20 | 250 | 450 | 100 | 620 | | Comparative example |
| 20 | G | 50 | 1 | 830 | 120 | 20 | 250 | 450 | 100 | 530 | | Example |
| 21 | H | 50 | 1 | 830 | 120 | 20 | 250 | 450 | 100 | 530 | | Example |
| 22 | I | 50 | 1 | 830 | 120 | 20 | 250 | 450 | 100 | 530 | | Example |
| 23 | J | 50 | 1 | 830 | 120 | 20 | 250 | 450 | 100 | 530 | | Example |
| 24 | K | 50 | 1 | 830 | 120 | 20 | 250 | 450 | 100 | 530 | | Comparative example |
| 25 | L | 50 | 1 | 830 | 120 | 20 | 250 | 450 | 100 | 530 | | Comparative example |
| 26 | M | 50 | 1 | 830 | 120 | 20 | 250 | 450 | 100 | 530 | | Comparative example |

(continued)

| Steel sheet No. | Steel | Cold-rolling reduction (%) | Conditions | | | | | | | | | Notes |
| --- | --- | --- | --- | --- | --- | --- | --- | --- | --- | --- | --- |
| | | | Average heating rate at 600°C-720°C (°C/s) | Heating temperature (°C) | Residence time at 780°C-950°C (S) | Average cooling rate at 450°C-720°C (°C/s) | Cooling stop temperature (°C) | Reheating temperature or holding temperature after cooling (°C) | Residence time in reheating or holding (s) | Plating and alloying temperature (°C) | |
| 27 | N | 50 | 1 | 830 | 120 | 20 | 250 | 450 | 100 | 530 | Comparative example |
| 28 | O | 50 | 1 | 830 | 120 | 20 | 250 | 450 | 100 | 530 | Comparative example |
| 29 | P | 50 | 1 | 830 | 120 | 20 | 250 | 450 | 100 | 530 | Comparative example |
| 30 | Q | 50 | 1 | 830 | 120 | 20 | 250 | 450 | 100 | 530 | Comparative example |
| 31 | R | 50 | 1 | 830 | 120 | 20 | 250 | 450 | 100 | 530 | Example |
| The underline indicates the outside of the scope of the present invention. | | | | | | | | | | | |

[Table 3]

| Steel sheet No. | Steel microstructure *1 | | | | | | | | | Coated layer | Mechanical characteristics | | | | | Notes |
|---|---|---|---|---|---|---|---|---|---|---|---|---|---|---|---|---|
| | V(F+B1) (%) | V(TM+B2) (%) | V(M+γ) (%) | V(γ) (%) | V(F+B1)+V(M+γ) (%) | Others (%) | d(B2) (μm) | d(TM) (μm) | C(γ) (%) | Fe content (mass%) | TS (MPa) | Bendability | Hole expand-ability (%) | Spot weld crack re-sistance | Axial com-pression sta-bility | |
| 1 | 0 | 94 | 6 | 3 | 6 | 0 | 8.6 | 8.4 | 0.37 | 12 | 1024 | Good | 67 | Good | Good | Example |
| 2 | 0 | 93 | 7 | 3 | 7 | 0 | 20.7 | 20.9 | 0.35 | 11 | 1030 | Poor | 51 | Good | Poor | Comparative example |
| 3 | 41 | 23 | 36 | 1 | 77 | 0 | 5.8 | 6.0 | 0.12 | 12 | 1129 | Good | 23 | Good | Poor | Comparative example |
| 4 | 1 | 90 | 9 | 4 | 10 | 0 | 7.3 | 7.1 | 0.39 | 10 | 1063 | Good | 59 | Good | Good | Example |
| 5 | 0 | 92 | 8 | 2 | 8 | 0 | 23.1 | 21.9 | 0.41 | 10 | 1056 | Poor | 55 | Good | Poor | Comparative example |
| 6 | 42 | 25 | 33 | 3 | 75 | 0 | 5.9 | 5.9 | 0.41 | 11 | 1133 | Good | 24 | Good | Poor | Comparative example |
| 7 | 3 | 89 | 8 | 4 | 11 | 0 | 7.2 | 7.0 | 0.48 | 10 | 1125 | Good | 60 | Good | Good | Example |
| 8 | 2 | 90 | 8 | 2 | 10 | 0 | 7.3 | 7.6 | 0.45 | 10 | 1084 | Good | 57 | Good | Good | Example |
| 9 | 47 | 18 | 35 | 2 | 82 | 0 | 5.4 | 5.9 | 0.40 | 10 | 1041 | Good | 34 | Good | Poor | Comparative example |
| 10 | 9 | 88 | 3 | 3 | 12 | 0 | 13.7 | 14.0 | 0.35 | 9 | 998 | Good | 76 | Good | Good | Example |
| 11 | 33 | 0 | 67 | 1 | 100 | 0 | 7.9 | 7.7 | 0.10 | 10 | 1193 | Good | 38 | Good | Poor | Comparative example |
| 12 | 0 | 100 | 0 | 0 | 0 | 0 | 13.9 | 12.6 | - | 10 | 991 | Good | 82 | Good | Poor | Comparative example |
| 13 | 0 | 97 | 3 | 1 | 3 | 0 | 5.9 | 6.1 | 0.40 | 13 | 1093 | Good | 46 | Good | Good | Example |
| 14 | 0 | 97 | 0 | 0 | 0 | 3 | 6.1 | 6.0 | - | 12 | 827 | Good | 44 | Good | Poor | Comparative example |
| 15 | 0 | 96 | 1 | 0 | 1 | 3 | 6.0 | 6.5 | - | 12 | 1022 | Good | 46 | Good | Poor | Comparative example |

| Steel sheet No. | Steel microstructure *1 | | | | | | | | | Coated layer | Mechanical characteristics | | | | | Notes |
|---|---|---|---|---|---|---|---|---|---|---|---|---|---|---|---|---|
| | V(F+B1) (%) | V(TM+B2) (%) | V(M+γ) (%) | V(γ) (%) | V(F+B1 )+V(M+γ) (%) | Others (%) | d(B2) (μm) | d(TM) (μm) | C(γ) (%) | Fecontent (mass%) | TS (MPa) | Bendability | Hole expand-ability (%) | Spot weld crack re-sistance | Axial com-pression sta-bility | |
| 16 | 0 | 91 | 7 | 6 | 7 | 2 | 4.3 | 3.9 | 0.37 | 12 | 1107 | Poor | 38 | Good | Good | Comparative example |
| 17 | 0 | 95 | 5 | 2 | 5 | 0 | 7.0 | 7.3 | 0.37 | 10 | 1028 | Good | 55 | Good | Good | Example |
| 18 | 0 | 95 | 5 | 3 | 5 | 0 | 7.0 | 6.6 | 0.39 | 1 | 1135 | Good | 59 | Poor | Good | Comparative example |
| 19 | 0 | 96 | 0 | 0 | 0 | 4 | 7.2 | 6.8 | - | 16 | 866 | Good | 50 | Good | Poor | Comparative example |
| 20 | 0 | 93 | 7 | 2 | 7 | 0 | 8.0 | 8.2 | 0.35 | 12 | 1106 | Good | 47 | Good | Good | Example |
| 21 | 0 | 95 | 4 | 1 | 4 | 1 | 9.1 | 8.8 | 0.28 | 12 | 1014 | Good | 58 | Good | Good | Example |
| 22 | 0 | 96 | 4 | 2 | 4 | 0 | 8.8 | 8.0 | 0.31 | 11 | 1009 | Good | 62 | Good | Good | Example |
| 23 | 0 | 95 | 5 | 1 | 5 | 0 | 9.3 | 9.8 | 0.29 | 12 | 1005 | Good | 63 | Good | Good | Example |
| 24 | 4 | 93 | 3 | 2 | 7 | 0 | 9.1 | 7.9 | 0.54 | 9 | 1034 | Good | 60 | Good | Poor | Comparative example |
| 25 | 1 | 96 | 3 | 1 | 4 | 0 | 8.7 | 8.2 | 0.30 | 12 | 912 | Good | 84 | Good | Good | Comparative example |
| 26 | 0 | 90 | 10 | 3 | 10 | 0 | 8.3 | 8.6 | 0.36 | 11 | 1120 | Poor | 41 | Poor | Good | Comparative example |
| 27 | 6 | 92 | 2 | 1 | 8 | 0 | 8.8 | 9.0 | 0.53 | 8 | 1128 | Good | 63 | Good | Poor | Comparative example |
| 28 | 0 | 95 | 5 | 0 | 5 | 0 | 9.0 | 9.3 | - | 13 | 1016 | Good | 49 | Good | Poor | Comparative example |
| 29 | 30 | 59 | 11 | 3 | 41 | 0 | 5.7 | 6.2 | 0.48 | 11 | 920 | Good | 35 | Good | Good | Comparative example |
| 30 | 0 | 93 | 7 | 3 | 7 | 0 | 7.5 | 7.1 | 0.30 | 10 | 1119 | Good | 59 | Poor | Good | Comparative example |

(continued)

| Steel sheet No. | Steel microstructure *1 | | | | | | | | | Coated layer | Mechanical characteristics | | | | | Notes |
|---|---|---|---|---|---|---|---|---|---|---|---|---|---|---|---|---|
| | V(F+B1) (%) | V(TM+B2) (%) | V(M+γ) (%) | V(γ) (%) | V(F+B1 )+V(M+γ) (%) | Others (%) | d(B2) (μm) | d(TM) (μm) | C(γ) (%) | Fe content (mass%) | TS (MPa) | Bendability | Hole expandability (%) | Spot weld crack resistance | Axial compression stability | |
| 31 | 2 | 93 | 5 | 4 | 7 | 0 | 6.6 | 7.0 | 0.32 | 11 | 1139 | Good | 60 | Good | Good | Example |

*1 V(F+B1): total area fraction of ferrite and carbide-free bainite, V(TM+B2): total area fraction of tempered martensite and carbide-containing bainite, V(M+γ): total area fraction of martensite and retained austenite, V(γ): area fraction of retained austenite, C(γ): C content of retained austenite, d(B2): average grain size of carbide-containing bainite, d(TM): average grain size of tempered martensite
*2 The underline indicates the outside of the scope of the present invention.

The galvanized steel sheets according to the examples had TS of 980 MPa or more and had good bendability, spot weld crack resistance, stretch-flangeability, and axial compression stability. Comparative examples outside the scope of the present invention had undesired strength, poor bendability, poor spot weld crack resistance, poor stretch-flangeability, or poor axial compression stability.

Industrial Applicability

The present invention can provide a galvanized steel sheet with TS of 980 MPa or more, good bendability, spot weld crack resistance, stretch-flangeability, and axial compression stability. The use of a high-strength galvanized steel sheet according to the present invention in automotive parts can contribute greatly to improved crash safety and fuel efficiency of automobiles.

Reference Signs List

1  spot weld
2  base plate
3  TIG weld
4  electrode

**Claims**

1. A high-strength galvanized steel sheet comprising:

a steel sheet and a galvanized layer,
wherein the steel sheet has a composition and a steel microstructure, the composition including,
on a mass percent basis,
C: 0.08% to 0.15%,
Si: 0.1% to 1.0%,
Mn: 2.0% to 3.0%,
P: 0.100% or less (excluding 0%),
S: 0.02% or less (excluding 0%),
Al: 0.01% to 1.0%, and
N: 0.010% or less, and
one or more selected from
Cr: 0.005% to 2.0%,
Ti: 0.005% to 0.20%,
Nb: 0.005% to 0.20%,
Mo: 0.005% to 2.0%, and
V: 0.005% to 2.0%, and
optionally one or more selected from
Ni: 0.005% to 2.0%,
Cu: 0.005% to 2.0%,
B: 0.0001% to 0.0050%,
Ca: 0.0001% to 0.0050%,
REM: 0.0001% to 0.0050%,
Sn: 0.01% to 0.50%, and
Sb: 0.0010% to 0.10%,
Cr + Ti + Nb + Mo + V being greater than or equal to Si, the remainder being Fe and incidental impurities,
the steel microstructure containing ferrite and carbide-free bainite constituting 25% or less (including 0%) by area fraction in total, tempered martensite and carbide-containing bainite constituting 70% to 97% by area fraction in total, martensite and retained austenite constituting 3% to 20% by area fraction in total, and retained austenite constituting 1% to 5% by area fraction, the ferrite, the carbide-free bainite, the martensite, and the retained austenite constituting 3% to 30% by area fraction in total, the retained austenite having a C content in the range of 0.10% to 0.50%, the carbide-containing bainite and the tempered martensite having an average grain size in the range of 5 to 20 $\mu$m, and

the galvanized layer is disposed on the steel sheet and has an Fe content of 6% or more by mass.

2. A method for producing a high-strength galvanized steel sheet, comprising:

an annealing step of hot-rolling and pickling a steel having a composition according to Claim 1 to form a hot-rolled sheet, optionally cold-rolling the hot-rolled sheet at a rolling reduction of 20% or more to form a cold-rolled sheet, heating the hot-rolled sheet or the cold-rolled sheet to a heating temperature in the range of 780°C to 950°C, a heating rate in a temperature range of 600°C to 720°C being 3.0°C/s or less, cooling the sheet to a temperature in the range of 150°C to 400°C, an average cooling rate in a temperature range of 450°C to 720°C being 10°C/s or more, a residence time in the temperature range of 780°C to 950°C in the heating and cooling being 30 seconds or more, and after the cooling, reheating the sheet at a heating temperature of more than 150°C and 600°C or less, a residence time at a temperature of more than 150°C and 600°C or less being 1000 seconds or less, or after the cooling, holding the sheet at a temperature of more than 150°C and 400°C or less for a residence time of 1000 seconds or less; and

a galvanizing step of galvanizing the annealed sheet after the annealing step, then heating the sheet to a temperature in the range of 460°C to 600°C for plating and alloying treatment, and cooling the sheet to 50°C or less.

**Patentansprüche**

1. Hochfestes galvanisiertes Stahlblech, umfassend:

ein Stahlblech und eine galvanisierte Schicht,
wobei das Stahlbleck eine Zusammensetzung und eine Stahlmikrostruktur aufweist, wobei die Zusammensetzung auf einer Massenprozent-Basis beinhaltet:

C: 0,08 % bis 0,15 %,
Si: 0,1 % bis 1,0 %,
Mn: 2,0 % bis 3,0 %,
P: 0,100 % oder weniger (ausschließlich 0 %),
S: 0,02 % oder weniger (ausschließlich 0 %),
Al: 0 01 % bis 1,0 %, und
N: 0,010 % oder weniger, und

eines oder mehreres ausgewählt aus

Cr: 0,005 % bis 2,0 %,
Ti: 0,005 % bis 0,20 %,
Nb: 0,005 % bis 0,20 %,
Mo: 0,005 % bis 2,0 %, und
V: 0,005 % bis 2,0 %, und

optional eines oder mehreres ausgewählt aus

Ni: 0,005 % bis 2,0 %,
Cu: 0,005 % bis 2,0 %,
B: 0,0001 % bis 0,0050 %,
Ca: 0,0001 % bis 0,0050 %,
REM: 0,0001 % bis 0,0050 %,
Sn: 0,01 % bis 0,50 %, und
Sb: 0,0010 % bis 0,10 %,

wobei Cr + Ti + Nb + Mo + V größer als oder gleich Si ist, wobei es sich beim Rest um Fe und zufällige Verunreinigungen handelt,
wobei die Stahlmikrostruktur enthält: Ferrit und carbidfreien Bainit, die 25 % oder weniger (einschließlich 0 %) Gesamtflächenanteil bilden, gehärteter Martensit und carbidhaltigen Bainit, die 70 % bis 97 % Gesamtflächenanteil bilden, Martensit und Restaustenit, die 3 % bis 20 % Gesamtflächenanteil bilden, und Restaustenit, der 1 % bis 5 % Flächenanteil bildet, wobei der Ferrit, der carbidfreie Bainit, der Martensit und der Restaustenit 3 % bis 30 % Gesamtflächenanteil bilden, wobei der Restaustenit einen C-Gehalt im Bereich von 0,10 % bis 0,50 % aufweist, wobei der carbidhaltige Bainit und der gehärtete Martensit eine durchschnittliche Korngröße im Bereich von 5 bis 20 μm aufweisen und die galvanisierte Schicht auf dem Stahlblech angeordnet ist und einen Fe-Gehalt von 6 Massen-% oder mehr aufweist.

2. Verfahren zum Herstellen eines hochfesten galvanisierten Stahlblechs, umfassend:

einen Glühschritt des Warmwalzens und Beizens eines Stahls, der eine Zusammensetzung nach Anspruch 1 aufweist, um ein warmgewalztes Blech zu bilden, des optionalen Kaltwalzens des warmgewalzten Blechs mit einer Walzreduktion von 20 % oder mehr, um ein kaltgewalztes Blech zu bilden, des Erhitzens des warmgewalzten oder kaltgewalzten Blechs auf eine Erhitzungstemperatur im Bereich von 780 °C bis 950 °C, wobei eine Erhitzungsrate in einem Temperaturbereich von 600 °C bis 720 °C 3,0 °C/s oder weniger beträgt, des Abkühlens des Blechs auf eine Temperatur im Bereich von 150 °C bis 400 °C, wobei eine durchschnittliche Abkühlungsrate in einem Temperaturbereich von 450 °C bis 720 °C 10 °C/s oder mehr beträgt, wobei eine Verweilzeit im Temperaturbereich von 780 °C bis 950 °C bei der Erhitzung und der Abkühlung 30 Sekunden oder mehr beträgt, und nach dem Abkühlen des Wiedererhitzens des Blechs auf eine Erhitzungstemperatur von mehr als 150 °C und 600 °C oder weniger, wobei eine Verweilzeit bei einer Temperatur von mehr als 150 °C und 600 °C oder weniger 1000 Sekunden oder weniger beträgt, oder nach dem Abkühlen des Haltens des Blechs bei einer Temperatur von mehr als 150 °C und 400 °C oder weniger während einer Verweilzeit von 1000 Sekunden oder weniger; und
einen Galvanisierungsschritt des Galvanisierens des geglühten Blechs nach dem Glühschritt und des nachfolgenden Erhitzens des Blechs auf eine Temperatur im Bereich von 460 °C bis 600 °C für eine Plattierungs- und Legierungsbehandlung und des Abkühlens des Blechs auf 50 °C oder weniger.

**Revendications**

1. Tôle d'acier galvanisée à haute résistance comprenant :

une tôle d'acier et une couche galvanisée,
dans laquelle la tôle d'acier a une composition et une microstructure d'acier, la composition comprenant, sur une base de pourcentage en masse,
C : 0,08 % à 0,15 %,
Si : 0,1 % à 1,0 %,
Mn : 2,0 % à 3,0 %,
P : 0,100 % ou moins (à l'exclusion de 0 %),
S : 0,02 % ou moins (à l'exclusion de 0 %),
Al : 0,01 % à 1,0 %, et
N : 0,010 % ou moins, et
un ou plusieurs choisis parmi
Cr : 0,005 % à 2,0 %,
Ti : 0,005 % à 0,20 %,
Nb : 0,005 % à 0,20 %,
Mo : 0,005 % à 2,0 % et
V : 0,005 % à 2,0 % et
facultativement un ou plusieurs choisis parmi
Ni : 0,005 % à 2,0 %,
Cu : 0,005 % à 2,0 %
B : 0,0001 % à 0,0050 %,
Ca : 0,0001 % à 0,0050 %,
REM : 0,0001 % à 0,0050 %,
Sn : 0,01 % à 0,50 % et
Sb : 0,0010 % à 0,10 %,
Cr + Ti + Nb + Mo + V étant supérieur ou égal à Si, le reste étant du Fe et des impuretés fortuites,
la microstructure d'acier contenant de la ferrite et de la bainite sans carbure constituant 25 % ou moins (y compris 0 %) en fraction surfacique par rapport au total, de la martensite trempée et de la bainite contenant du carbure constituant de 70 % à 97 % en fraction surfacique par rapport au total, de la martensite et de l'austénite retenue constituant de 3 % à 20 % en fraction surfacique par rapport au total, et de l'austénite constituant de 1 % à 5 % en fraction surfacique, la ferrite, la bainite sans carbure, la martensite et l'austénite retenue constituant de 3 % à 30 % en fraction surfacique au total, l'austénite retenue ayant une teneur en C dans la plage allant de 0,10 à 0,50 %, la bainite contenant du carbure et la martensite trempée ayant une taille de grain moyenne dans la plage allant de 5 à 20 μm, et
la couche galvanisée est déposée sur la tôle d'acier et a une teneur en Fe de 6 % ou plus en masse.

2. Procédé de production d'une tôle d'acier galvanisée à haute résistance, comprenant :

une étape de recuit consistant à laminer à chaud et à décaper un acier ayant une composition selon la revendication 1 pour former une tôle laminée à chaud, facultativement laminer à froid la tôle laminée à chaud avec une réduction de laminage supérieure ou égale à 20 % pour former une tôle laminée à froid, chauffer la tôle laminée à chaud ou la tôle laminée à froid à une température de chauffage dans la plage allant de 780°C à 950°C, une vitesse de chauffage dans une plage de température allant de 600°C à 720°C étant égale ou inférieure à 3,0°C/s, refroidir la tôle à une température dans la plage allant de 150°C à 400°C, une vitesse de refroidissement moyenne dans une plage de température de 450°C à 720°C étant égale ou supérieure à 10°C/s, un temps de séjour dans la plage de température allant de 780°C à 950°C durant le chauffage et le refroidissement étant de 30 secondes ou plus, et après le refroidissement, réchauffer la tôle à une température de chauffage supérieure à 150°C et inférieure ou égale à 600°C, un temps de séjour à une température supérieure à 150°C et inférieure ou égale à 600°C étant inférieur ou égal à 1000 secondes, ou après le refroidissement, maintenir la tôle à une température supérieure à 150°C et inférieure ou égale à 400°C pendant un temps de séjour inférieur ou égal à 1000 secondes ; et
une étape de galvanisation consistant à galvaniser la tôle recuite après l'étape de recuit, puis à chauffer la tôle à une température dans la plage allant de 460°C à 600°C pour un traitement de placage et d'alliage, et à refroidir la tôle à 50°C ou moins.

# FIG. 1

ISLAND MARTENSITE OR
RETAINED AUSTENITE

CARBIDE

(a)  |— 3 μm —|

(b)  |— 3 μm —|

# FIG. 2

78 mm

120 mm

36 mm

46 mm

1

FIG. 3

IMPACT
DIRECTION

3

2

FIG. 4

4

2 mm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015193907 A
- JP 2009138222 A

- WO 2015092982 A1